# EUROPEAN PATENT APPLICATION

(11) **EP 4 534 701 A1**
(43) Date of publication of application: **09.04.2025**
(21) Application number: 22945037.4
(22) Date of filing: 28.11.2022
(51) Int. Cl.: C21B 13/12, C21B 13/14, F27D 1/00, F27B 14/06, F27B 14/00

(54) **ELECTRIC FURNACE**

(30) Priority: 03.06.2022 KR 20220068183
(71) Applicant: Hyundai Steel Company, Incheon 22525 (KR)
(72) Inventor: SHIN, Dae Hoon, Incheon 22525 (KR); KIM, Kyun Tae, Incheon 22525 (KR); KIM, Yong Hee, Incheon 22525 (KR); PARK, Young Joo, Incheon 22525 (KR); SONG, Woo Seok, Incheon 22525 (KR); SHIN, Myoung Cheol, Incheon 22525 (KR); EOM, June Yong, Incheon 22525 (KR); LEE, Jae Rang, Incheon 22525 (KR); LEE, Jae Min, Incheon 22525 (KR); JO, Jong Oh, Incheon 22525 (KR)
(74) Representative: Viering, Jentschura & Partner mbB Patent- und Rechtsanwälte
(86) International application number: PCT/KR2022/018984
(87) International publication number: WO 2023/234499

(57) **Abstract**

The present invention relates to an electric furnace provided with a double type melting furnace, which includes: a first upper cell that forms a first upper space of a first melting furnace in which a first iron source is introduced and molten; a second upper cell that is disposed in a horizontal direction of the first upper cell and forms a second upper space of a second melting furnace in which a second iron source is introduced and molten; a lower cell that is combined with lower portions of the first upper cell and the second upper cell and forms a single integrated space in which a first lower space of the first melting furnace and a second lower space of the second melting furnace are integrated; and a partition wall unit that is installed to vertically move up and down between the first upper cell and the second upper cell, and separates the first lower space of the first melting furnace and the second lower space of the second melting furnace, although both of the lower spaces are integrally formed by the lower cell.

## Description

### [Field of Invention]

The present invention relates to an electric furnace, more particularly, to an electric furnace provided with a double type melting furnace, in which ore-based materials (OBM's), low-grained scraps and general scraps are concurrently introduced, wherein gangue components input in large quantities from the OBM's can be effectively separated without being mixed with the existing slag, while melting main raw materials and refining simultaneously.

### [Background of Invention]

In general, a steel material production process in steel metallurgy industries may be largely divided into a "blast furnace-converter" production system (hereinafter, referred to as "converter") that uses ores as the main raw material, and an "electric furnace" production system that uses scraps recovered/recycled after manufacturing products by utilizing the produced steel material.

The converter system is widely used for production of high quality products, mostly, steel sheets or plates sensitive to surface defects, based on the initial of molten steel from the ore. On the other hand, the electric furnace system using scraps which may be affected by impurities (Cu, Sn, Cr, Mo, Ni, etc., hereinafter referred to as Tramp elements) added during production of final products or mixed during recovery is commonly applied to production of bars/profiles mostly requiring high strength. However, if specific requirements are satisfied, in some cases, steel sheets or plates are produced by utilizing an electric furnace process. Further, as carbon neutral becomes a global issue, the electric furnace process involving generation of carbon dioxide (CO₂) in a level of ≤20% compared to the converter process is now growing as an alternative proposal for future steel-making industry (steel sheet production).

In this regard, process interruption factors with regard to high quality steel sheet production utilizing an electric furnace process may be divided into the main raw material (scraps) and a problem caused by features of a melting process.

The former, that is, the main raw material is a cause to occur surface defects of a product. Specifically, for a steel sheet product, to which mechanical processing is applied to only a single axial direction while executing surface plating, surface defects occurred during continuous casting due to Tramp elements input from the scrap tend to become worse when passing through a rolling process, and workability may also become deteriorated. Secondly, owing to features of a scrap melting process using arc (electric energy), there is a phenomenon that nitrogen (N₂) gas in air around an electrode is ionized (plasma) and flows into molten steel through arc flow. Further, nitrogen accumulated in the scrap itself (absorbed nitrogen in the production step) also generally exhibits higher [N] ppm level than that of the converter process. Specifically, the [N] ppm level is commonly ≥80 ppm which is much higher than ≥15 ppm in the converter. This indicates a molten steel quality not satisfying component specifications of high grade steel sheets in the level of ≤30 ppm.

In order to overcome such limitations as described above, extensive or active use of materials based on ores (OBM's: Ore Based Materials) (ex. DRI, HBI, PI, GPI, etc.) is considered as a desired alternative proposal. As a representative example, unlike the blast furnace, DRI/HBI producing an iron source by processing ores into pellets and reacting the same with reductive gas to directly perform a reductive reaction may be exemplified. It is now increasing electric furnace steel-making companies that manufacture steel sheets through application of currently available installations. Since the above material is a raw material based on ores (the component similar to that used in the blast furnace), this has an advantage of controlling the initial property of molten steel (that is, an input level of Tramp elements) according to a mixing ratio when it is applied to the electric furnace. On the contrary, in the case of mass application (high mixing ratio is applied: ≥30%), it cannot be introduced through "Batching charging", a typical main raw material charging manner in the electric furnace, but entails a disadvantage in that a separate feeding installation such as "Continuous Roof Charging" is required. However, as the mixing ratio of OBMs is increased, a scrap melting process susceptible to nitrogen inflow is shortened (becoming Flat Batch) thereby attaining effects of reducing [N] level in the molten steel.

In order to manufacture high quality steels for exterior plates of automobiles or the like, it is necessary to apply the DRI/HBI mixing ratio (≥80%) at a level similar to a hot metal ratio (HMR) of the converter currently used in the art. However, there are limitations in increasing the above mixing ratio (increased energy consumption, reduction of productivity, etc.) with regard to the currently available installations and technologies, therefore, it is required to develop a novel installation and technology in order to overcome the above limitations.

### [Summary of Invention]

### [Technical Problem to be Solved]

DRI/HBI is produced through direct gas reduction, therefore, gangue components (SiO₂, AL₂O₃, etc.) included in the ore are entrapped in the raw material and entail a problem in that all of the components must be entirely removed in the electric furnace. This is different from the case of a blast furnace in which the gangue components are isolated/removed when molten iron produced in the blast furnace passes from a solid phase (ore) to a liquid phase (molten iron). Further, since a [P] component input level is quite higher than the scrap and a slag basicity (or alkalinity) (C/S) is drastically lowered due to the gangue components, an amount of slag former introduced for refining is increased hence causing a problem in that slag generation increases exponentially.

Further, owing to features of the direct gas reduction method, the reductive reaction is somewhat disadvantageous compared to the blast furnace process, and FeO content in raw material (5 to 8%) is generally high. Due to this, there is a problem in that a reduction process must be maximally performed (increase of energy and reductive agent consumption) in the electric furnace, in which an oxidation process is performed. Accordingly, as the mixing ratio increases, working performance or operation results such as increased use amount of slag former, increased power consumption, decreased molten steel recovery, reduction of productivity, etc., are drastically deteriorated and may result in loss of cost competitiveness.

As such, when the conventional and commonly compatible electric furnace is operated with application of an exclusive introduction installation only, there is a problem in that typical sheets or plates (materials for structure) are produced with limited DRI/HBI mixing ratio of Max. 30% level.

The present invention is for solving different problems including the above problems, and an object of the present invention is to provide an electric furnace that variably controls DRI/HBI (including other OBMs) mixing ratio from 0 to 100% depending on types of steels to be produced and, simultaneously, ensures working stability in response to high mixing ratio as well as economic advantage. However, this object is only illustrative and the scope of the present invention is duly not restricted thereto.

### [Technical Solution]

According to an embodiment of the present invention, there is provided an electric furnace. This electric furnace may be provided with a double type melting furnace in which two melting furnaces are included and at least partially combined together, the electric furnace comprising: a first upper cell that forms a first upper space of a first melting furnace in which a first iron source is introduced and molten; a second upper cell that is disposed in a horizontal direction of the first upper cell and forms a second upper space of a second melting furnace in which a second iron source is introduced and molten; a lower cell that is combined with lower portions of the first upper cell and the second upper cell and forms a single integrated space in which a first lower space of the first melting furnace and a second lower space of the second melting furnace are integrated; and a partition wall unit that is installed to vertically move up and down between the first upper cell and the second upper cell, and separates the first lower space of the first melting furnace and the second lower space of the second melting furnace, although both of the lower spaces are integrally formed by the lower cell.

According to an embodiment of the present invention, the first upper cell may have a furnace wall formed of a refractory material so that the melting furnace has a fire-resisting structure.

According to an embodiment of the present invention, the first upper cell may include: a first electrode member, of which at least a portion is inserted into the first upper space of the first melting furnace through a small ceiling of a first roof part formed on top of the first upper cell and melts the first iron source with arc heat; and a plurality of iron source feeders that are radially disposed around the center of the first electrode member and feeds the first iron source through the first upper space of the first melting furnace.

According to an embodiment of the present invention, the first electrode member may include a plurality of alternate current (AC) electrodes that are radially disposed around the center of the small ceiling of the first roof part, while the plurality of iron source feeders may continuously feed the first iron source, respectively, toward ignition points of individual AC electrodes corresponding to individual iron source feeders.

According to an embodiment of the present invention, the second upper cell may include: a second electrode member, of which at least a portion is inserted into the second upper space of the second melting furnace through a small ceiling of a second roof part formed on top of the second upper cell and melts the second iron source with arc heat; and a pre-heat feeder that is installed on one side of the second electrode member on top of the second upper cell, temporarily stores a predetermined amount of the second iron source in a storage space inside the pre-heat feeder, preheats the second iron source temporarily stored in the above storage space using waste heat generated inside the second melting furnace, and then, feeds the second iron source through the second upper space of the second melting furnace.

According to an embodiment of the present invention, the second electrode member may include: an upper direct current (DC) electrode that is inserted through the small ceiling of the second roof part, and is provided on the second upper space side of the second melting furnace; a lower DC electrode that is installed on the bottom of the lower cell to face with the upper DC electrode in the vertical direction, and is provided on the second lower space side of the second melting furnace.

According to an embodiment of the present invention, the lower DC electrode may include a first lower electrode, in which a central axis is formed to be coaxial with a central axis of the upper DC electrode on the bottom of the lower cell, so that the lower DC electrode can directly face with the upper DC electrode.

According to an embodiment of the present invention, the lower DC electrode may further include a second lower electrode, in which a central axis is formed to be inclined at a predetermined angle to the central axis of the upper DC electrode on the bottom of the lower cell and thus to be biased toward the pre-heat feeder with respect to the upper DC electrode, so that the lower DC electrode can face with the upper DC electrode in an inclined direction.

According to an embodiment of the present invention, the second electrode member may induce a current flow between the upper DC electrode and the second lower electrode immediately after feeding the second iron source by the pre-heat feeder, while inducing a current flow between the upper DC electrode and the first lower electrode after the second iron source is completely molten.

According to an embodiment of the present invention, a volume of the first melting furnace that consists of the first upper space of the first upper cell and the first lower space of the lower cell may be smaller than a volume of the second melting furnace that consists of the second upper space of the second upper cell and the second lower space of the lower cell.

According to an embodiment of the present invention, in order to communicate the first upper space of the first melting furnace with the second upper space of the second melting furnace, the electric furnace of the present invention may further include an exhaust gas duct that connects the first upper cell and the second upper cell in a duct form and feeds waste heat generated in the first melting furnace toward the second melting furnace.

According to an embodiment of the present invention, the first melting furnace may include a first slag door, which is provided at a boundary portion between the first upper cell and the lower cell and is configured in a double door form that includes an upper door opening upward and a lower door opening downward to face each other in the vertical direction, so that the slag generated in the first melting furnace can be selectively excluded.

According to an embodiment of the present invention, the first melting furnace may open the upper door to maintain a height of the slag in the first melting furnace at a predetermined level during operation, while opening the lower door when excluding (or discharging) the slag inside the first melting furnace.

According to an embodiment of the present invention, the second melting furnace may include a second slag door, which is provided at a boundary portion between the second upper cell and the lower cell and is configured in a single door form to be opened upward or downward, so that the slag generated in the second melting furnace can be selectively excluded.

According to an embodiment of the present invention, in order to control a flow of molten metal between the first melting furnace and the second melting furnace, the electric furnace of the present invention may further include a bottom gas blowing device that is disposed on the bottom of the lower cell and is provided with a plurality of plugs to discharge gas.

According to an embodiment of the present invention, the lower cell may be provided with a tapping port on a floor surface forming the first lower space at a position corresponding to the first electrode member, which is installed on the small ceiling of the first roof part formed on top of the first upper cell, so as to tap the molten metal in the double type melting furnace.

According to an embodiment of the present invention, the floor surface forming the first lower space, in which the tapping port is formed, in the lower cell may be higher than a floor surface forming the second lower space.

According to an embodiment of the present invention, the electric furnace of the present invention may further include a tilting device that can tilt the double type melting furnace, in which the first melting furnace and the second melting furnace are at least partially combined, in the horizontal direction or enables double tilting of the same in the horizontal direction and a width direction perpendicular to the vertical direction.

According to an embodiment of the present invention, the tilting device may include: in order to maintain the center of the double type melting furnace tilted by the tilting device, a support cylinder that supports the double type melting furnace while possibly tilting the same; and a plurality of drive cylinders, specifically, at least three drive cylinders that are radially disposed around the support cylinder to support the double type melting furnace on at least three points, and can be separately driven up and down in order to selectively tilt the double type melting furnace in the horizontal direction or the width direction described above.

According to an embodiment of the present invention, the tilting device may tilt the double type melting furnace in the horizontal direction so that the double type melting furnace can be tilted in a direction of the first melting furnace, in which the tapping port is formed, when tapping the molten metal in the double type melting furnace; on the other hand, when excluding the slag in the first melting furnace or the slag in the second melting furnace, the tilting device may tilt the double type melting furnace in the width direction as described above, so that the double type melting furnace can be tilted in a direction of the first slag door in the first melting furnace and a direction of the second slag door in the second melting furnace.

According to an embodiment of the present invention, the pre-heat feeder may include: a pre-heat chamber that is formed in a cylindrical shape or a polygonal column shape to be extended in the vertical direction, thereby configuring a finger type shaft furnace; and a chamber door that is installed on a lower side of the opened pre-heat chamber in order to selectively open the lower side of the pre-heat chamber.

According to an embodiment of the present invention, the first iron source introduced into the first melting furnace may include ore-based materials (OBM's), while the second iron source introduced into the second melting furnace may include scraps.

### [Effects of Invention]

According to an embodiment of the present invention configured as described above, this basically involves concurrent introduction of OBM's and low-grained scraps, as well as general scraps, and gangue components input in large quantities from OBMs may be effectively separated to prevent the same from being mixed with the existing slag (the gangue comprising SiO₂ and Al₂O₃ as main components mostly acts as an acidic slag and, if the input amount is large, may become a reason for introducing a large amount of CaO in order to refine/remove P component in the molten steel, therefore, an increase in unit of slag former source and a large amount of slag generated due to the same may act major factors for non-economical structure such as reduction of molten steel recovery, increased energy consumption, extended operation time, etc.), whereby a double type melting furnace capable of melting the main raw material and refining simultaneously can be implemented.

As such, in order to change the conventional "blast furnace-converter" production system into the "electric furnace" production system, the present invention relates to a new concept of melting method using an electric furnace that introduces a large amount of ore-based iron source (representative by DRI) and, simultaneously, can ensure the same or higher productivity/economical advantage/quality than the conventional "blast furnace-converter" production system, wherein a new form of electric furnace capable of using OBM's in large quantities is used to thus achieve effects of realizing carbon neutral in steel-making industry.

For example, when the electric furnace with a configuration of the double type melting furnace according to the present invention is applied, influence of gangue input in large quantities from DRI on working as well as optimum refining conditions may be maintained/managed by effectively separating and discharging the gangue from the first melting furnace; mass application of DRI utilizing the first melting furnace for OBM's only with high efficiency is possible to thus decrease Tramp components; according to a process of scrap introduction/operation through the first melting furnace, to which OBM's are continuously charged, and the second melting furnace connected to the same in the form of double structure, a perfect Flat Bath operation may be performed; and nitrogen pick-up may be effectively blocked through arc sealing owing to an exhaust gas duct structure, thereby ensuring N output level of the converter. Further, a high energy concentrated structure of the first melting furnace, scrap preheating in the second melting furnace using exhaust gas, and the concurrent operation of the first melting furnace and the second melting furnace may implement an electric furnace that can reduce an energy consumption to a general scrap working level or less, and shorten an operation time to the converter level. Of course, the scope of the present invention is not particularly limited to such effects as described above.

### [Brief Description of Drawings]

FIG. 1 is a cross-sectional view schematically illustrating an electric furnace according to an embodiment of the present invention.
FIG. 2 is a cross-sectional view schematically illustrating a cross-section of the electric furnace taken along cut line A-A shown in FIG. 1.
FIG. 3 is a cross-sectional view schematically illustrating a cross-section of the electric furnace taken along cut line B-B shown in FIG. 1.
FIGS. 4 to 7 are cross-sectional views schematically illustrating an operation process of the electric furnace shown in FIG. 1 by steps.
FIGS. 8 and 9 are cross-sectional views schematically illustrating a tilting process of the electric furnace shown in FIG. 1.
FIGS. 10 and 11 are tables showing comparison results between the operation result when using the conventional electric furnace and the expected operation index when using the electric furnace of the present invention.

### [Detailed Description of Preferred Embodiments of Invention]

Hereinafter, preferred embodiments of the present invention will be described in detail with reference to the accompanying drawings.

The embodiments of the present invention are provided to more completely explain the present invention to persons having ordinary knowledge in the art to which the present invention pertains ("those skilled in the art"), and the following embodiments may be modified into various and different forms, and the scope of the present invention is duly not limited thereto. On the contrary, these embodiments are provided to make the present description more sufficient and complete, and to perfectly transfer the spirit of the present invention to those skilled in the art. Further, a thickness or size of each layer shown in the drawings may become exaggerated for convenience and clarity of explanation.

Hereinafter, the embodiments of the present invention will be described with reference to the drawings that schematically illustrate ideal examples of the present invention. In the drawings, for example, modifications of the illustrated morphology may be predicted according to manufacturing skills and/or tolerance. Accordingly, the embodiments based on the spirit of the present invention should not be interpreted as being limited to specific shapes of the area illustrated in the present specification, for example, should include variations of the shape caused in the manufacturing process.

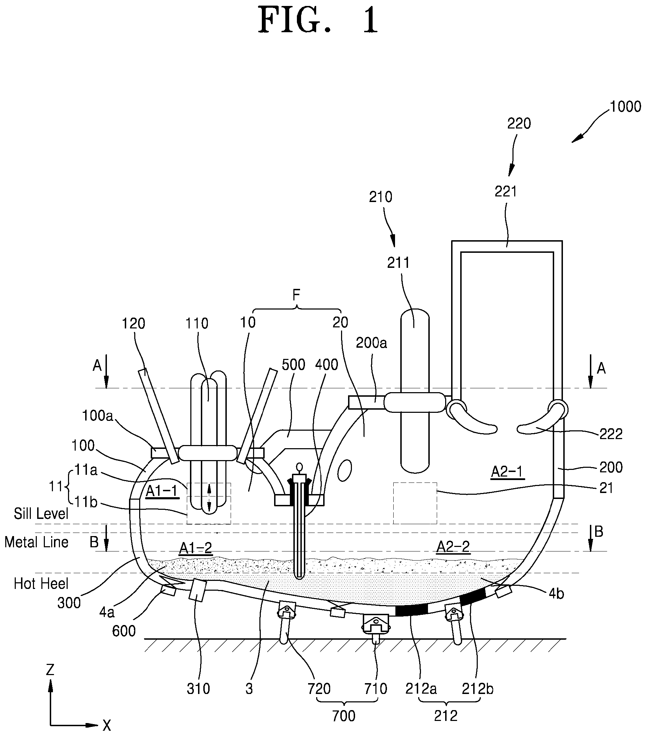

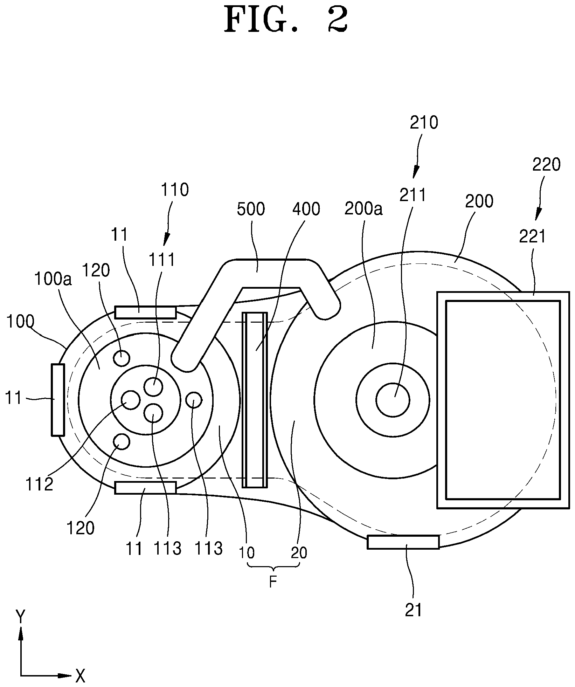

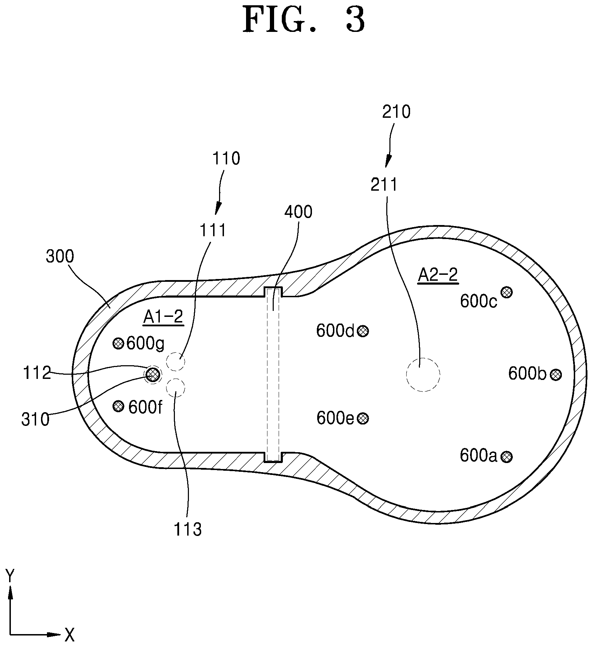

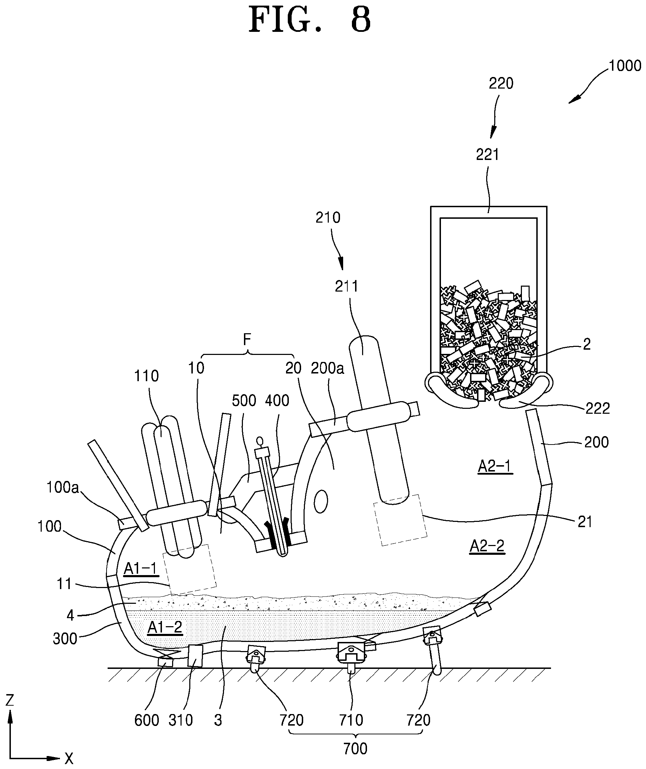

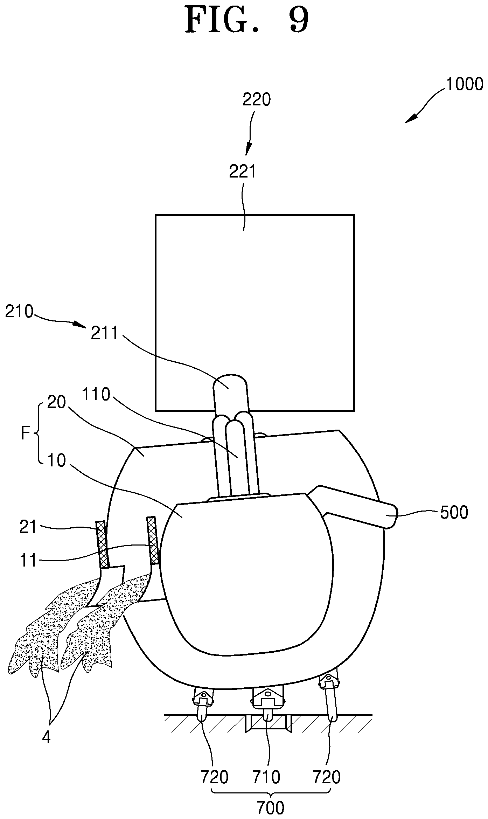

FIG. 1 is a cross-sectional view schematically illustrating an electric furnace 1000 according to an embodiment of the present invention; FIG. 2 is a cross-sectional view schematically illustrating a cross-section of the electric furnace 1000 taken along dotted line A-A shown in FIG. 1; FIG. 3 is a cross-sectional view schematically illustrating a cross-section of the electric furnace 1000 taken along dotted line B-B shown in FIG. 1; FIGS. 4 to 7 are cross-sectional views schematically illustrating an operation process of the electric furnace 1000 shown in FIG. 1 by steps; FIGS. 8 and 9 are cross-sectional views schematically illustrating a tilting process of the electric furnace shown in FIG. 1; and FIGS. 10 and 11 are tables showing comparison results between the operation result when using the conventional electric furnace and expected operation index when using the electric furnace of the present invention.

Firstly, as shown in FIG. 1, the electric furnace 1000 according to an embodiment of the present invention may be an electric furnace provided with a double type melting furnace F in which two melting furnaces 10 and 20 are disposed in a horizontal direction (X-axial direction) and are at least partially combined, so as to melt different iron sources.

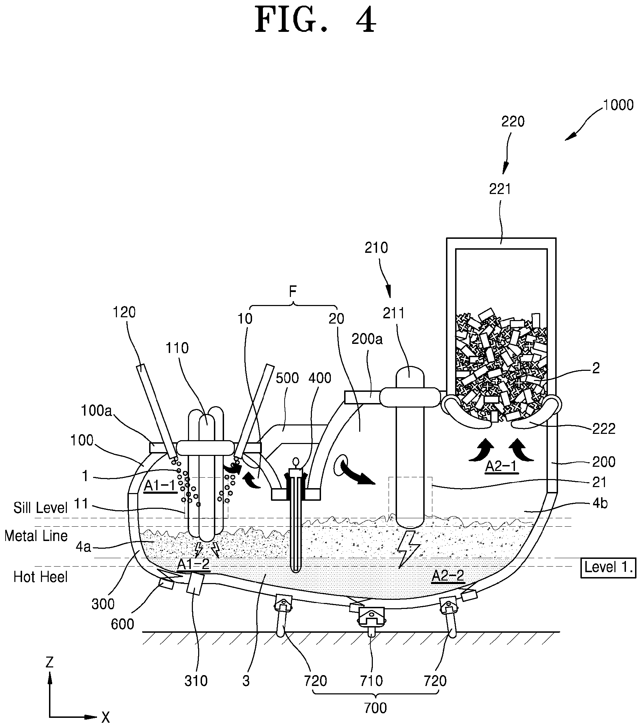

For instance, a first melting furnace 10 in the double type melting furnace F may melt a first iron source ("1" shown in FIG. 4), which mostly includes ore-based materials (OBM's) (DRI, HBI, PI, GPI, etc.) and, in addition, may also include some low-grained scraps (shredder, stock line, etc.), by charging the same in the above furnace, wherein this furnace may have a structure to perform continuous melting by application of energy controlled in synch with an introduction rate of the first iron source 1 continuously introduced through a ceiling (in an energy level at which a melting energy for the first iron source 1 and a temperature of molten metal ("3" shown in FIG. 4) in the furnace can be maintained at desired levels).

With regard to the first melting furnace 10, in view of the afore-mentioned melting features, the first iron source 1 is not stacked in the furnace and the furnace does not need a large space. Therefore, an internal volume of the furnace may be limited to a minimum level sufficient not to damage an external wall due to arc generated in the electrode (that is, a compact type furnace having a smaller volume compared to a second melting furnace 20 described later), so that it has a structure capable of concentrating the applied energy to thus induce high melting rate.

Further, a second melting furnace 20 in the double type melting furnace F may be a melting furnace for exclusive use of scarps which are introduced as a second iron source ("2" shown in FIG. 4), wherein it has a basic structure substantially equal to any commonly available electric furnace ("common electric furnace") and may be a main body in which a scrap pre-heating furnace is additionally provided for high rate/high efficiency operation.

As such, the first melting furnace 10 and the second melting furnace 20 to configure the double type melting furnace F are provided in a double furnace structure in which both of these furnaces are at least partially combined to form a single body sharing a lower cell 300, in addition, high efficiency supplementary equipment to apply chemical energy and control a reaction in the furnace may further be provided and operated (additional or secondary raw material and a gas injector, or the like; since types and locations of the equipment are freely operated as necessary according to the concept of process design, a detailed description thereof will be omitted in the present invention).

Hereinafter, the following described will be given to more concretely stipulate a first upper cell 100, a second upper cell 200, a lower cell 300 and a partition wall unit 400, which configure the first melting furnace 10 and the second melting furnace 20 in the above described double type melting furnace F.

As illustrated in FIG. 1, the first melting furnace 100 is made of a refractory material and may form a first upper space (A1-1) of the first melting furnace 10 in which the first iron source 1 is introduced and molten therein.

More specifically, the first melting furnace 10 is purposed of continuously introducing/melting OBMs and partially included low-grained scraps as the first iron source 1 and is characterized in that an arc generation site may be maintained at a predetermined location in the upper portion of molten metal level (Hot Heel ~ Metal Line) whereby a distance between a furnace wall of the first upper cell 100 and the ignition point may be maintained at a predetermined level. Therefore, unlike the commonly available scrap melting furnace, high cooling performance in a specific working section may not be required. On the contrary, excessive cooling of the furnace wall causes energy loss, which is not matched with the concept of high energy concentration type furnace body with regard to the first melting furnace 10 of the present invention. Further, considering that a furnace wall scratch phenomenon possibly occurring in the Scrap Batch Charging manner does not occur in a furnace for exclusive use in which OBM's and low-grained scraps are continuously introduced/molten, it may be effective to form a furnace wall in the first upper cell 100 in view of the furnace body heat holding concept.

However, in order to prevent deformation of an outer iron shell that serves to fix the refractory material, which has functions of confining (or holding) high heat in the furnace body, a minimum water cooling installation may be provided (an outer shell water cooling structure is not shown in FIG. 1).

As shown in FIG. 1, the first upper cell 100 may include: a first electrode member 110, of which at least a portion is inserted into the first upper space (A1-1) of the first melting furnace 10 through a small ceiling of a first roof part 100a formed on top of the first upper cell 100 and melts the first iron source 1 with arc heat; and a plurality of iron source feeders 120 that are radially disposed around the center of the first electrode member 110 and feeds the first iron source 1 through the first upper space (A1-1) of the first melting furnace 10.

More specifically, as shown in FIGS. 1 and 2, the first electrode member 110 may include a plurality of alternate current (AC) electrodes (111, 112, 113) that are radially disposed around the center of the small ceiling of the first roof part 100a, while the plurality of iron source feeders 120 may be provided in the same number of the plural AC electrodes (111, 112, 113) and continuously feed the first iron source 1, respectively, toward ignition points of individual AC electrodes corresponding to individual iron source feeders.

For example, the first electrode member 110 consisting of the plural AC electrodes (111, 112, 113) (if necessary, a direct current (DC) current flowing system may also be introduced) is characterized in that OBM's having a relatively low specific gravity than molten steel, which is introduced as the first iron source 1 into the first melting furnace 10, may exist in slag 4a or on an interface between molten metal 3 and the slag 4a, therefore, it may be effective to form a wide ignition point. Moreover, at the beginning of the operation, for arc protection and prevention of nitrogen pickup by arc, slag 4a foaming is required. Thereafter, when a large quantity of gangues are input by OBM's introduction and thus an amount of the slag 4a is rapidly increased, the slag 5a foaming should rather be suppressed. As such, monitoring a level of slag 4a may become significant in the first melting furnace 10. In addition, for measurement of the above slag level, the AC current flowing system may be more advantageous.

Further, the plural iron source feeders 120 are an apparatus for continuously introducing OBM's as the first iron source 1 (if necessary, low-grained scraps may also be introduced). Although not shown, this may be the equipment that delivers the first iron source 1 to a conveyer from any storage facilities of the corresponding main raw material, allows the iron source to free fall into a pipe type shutter (transforming from potential energy to kinetic energy) through a transmission hopper mounted at a desired height on the top of the first melting furnace 10 to thus ensure sufficient kinetic energy, which in turn, continuously introduces the first iron source 1 into the furnace through a plurality of input ports provided to correspond to the plural AC electrodes (111, 112, 113), respectively. More particularly, the plural iron source feeders 120 may continuously introduce the first iron source 1 to three ignition points formed between the plural AC electrodes (111, 112, 113) of the first electrode member 110, thereby maximizing melting efficiency.

As shown in FIG. 1, the second upper cell 200 may be disposed in parallel to the first upper cell 100 in a horizontal direction (X-axial direction), and may form a second upper space (A2-1) of the second melting furnace 20 in which scraps are introduced and molten as a second iron source 2. In this case, the second iron source 2 may mostly include scraps and, in addition, some high-grained ore-based materials (OBM's).

More specifically, the second melting furnace 20 may have a structure similar to the common electric furnace for melting general scraps, based on metal melting features. In consideration of mixing properties of main raw materials applied to the present invention, an input ratio of general scraps is small and a height of scraps introduced/stacked in the furnace is low, therefore, up/down variation in position of ignition point occurrence is relatively low compared to the typical electric furnace (that is, spatial proximity between the furnace wall and the ignition point). However, it still cannot exclude the possibility of increasing topical thermal effects on the furnace wall. Furthermore, as the input ratio is decreased, it is more efficient to reduce energy loss by reducing the second upper space (A2-1) inside the furnace, therefore, the above effects should also be considered. Accordingly, the second upper cell 200 of the second melting furnace 20 is fundamentally designed similar to the water cooling equipment in the common electric furnace, in addition, may be configured as a water cooling installation with a double-layer structure which is somewhat decreased in size and can effectively form a thick slag coating layer on the furnace wall for heat insulation, so that the second upper cell preferably becomes a system capable of separately controlling the cooling performance of each layer.

As shown in FIG. 1, the second upper cell 200 described above may include: a second electrode member 210, of which at least a portion is inserted into the second upper space (A2-1) of the second melting furnace 20 through a small ceiling of a second roof part 200a formed on top of the second upper cell 200 and melts the second iron source 2 with arc heat; and a pre-heat feeder 220 that is installed on one side of the second electrode member 210 on top of the second upper cell 200, temporarily stores a predetermined amount of the second iron source 2 in a storage space inside the pre-heat feeder, preheats the second iron source 2 temporarily stored in the above storage space using waste heat generated inside the second melting furnace 20, and then, feeds the second iron source 2 through the second upper space (A2-1) of the second melting furnace 20.

For example, as shown in FIG. 1, the second electrode member 210 may include: an upper direct current (DC) electrode 211 that is inserted through the small ceiling of the second roof part 200a, and is provided on the second upper space (A2-1) side of the second melting furnace 20; a lower DC electrode 212 that is installed on the bottom of the lower cell 300 to face with the upper DC electrode 211 in the vertical direction, and is provided on the second lower space (A2-2) side of the second melting furnace 20. In this regard, the lower DC electrode 212 may include a first lower electrode 212a, in which a central axis is formed to be coaxial with a central axis of the upper DC electrode 211 on the bottom of the lower cell 300, so that the lower DC electrode can directly face with the upper DC electrode 211, as well as a second lower electrode 212b, in which a central axis is formed to be inclined at a predetermined angle to the central axis of the upper DC electrode 211 on the bottom of the lower cell 300 and thus to be biased toward the pre-heat feeder 220 with respect to the upper DC electrode 211, so that the lower DC electrode can face with the upper DC electrode 211in an inclined direction.

At this time, the second electrode member 210 may induce a current flow between the upper DC electrode 211 and the second lower electrode 212b immediately after feeding the second iron source 2 by the pre-heat feeder 220, while inducing a current flow between the upper DC electrode 211 and the first lower electrode 212a after the second iron source 2 is completely molten.

More specifically, as described above, the second electrode member 210 may be a DC electrode member, which is further provided with the second lower electrode 212b deflected toward the pre-heat feeder 220 with respect to the upper DC electrode 211. The second melting furnace 20 as an exclusive furnace for melting general scraps is principally not limited in terms of types of power supply system (AC or DC applicable), however, since the pre-heat feeder 220 is placed, it may entail a structural limitation in that, when the second iron source 2 is loaded, the second iron source 2 is introduced and lean too much toward the lower side of the pre-heat feeder 220 apart from the center of the second electrode member 210.

In order to efficiently melt the second iron source as described above, it is necessary to concentrate the applied electric energy to the corresponding part. To this end, it may be more advantageous that a DC current flow system is applied to the second electrode member 210. For example, the DC current flow system has an advantage in that a current stream is formed between the upper DC electrode 211 and the lower DC electrode 212, that is, in a vertical direction. Therefore, when the second lower electrode 212b among the lower DC electrode 212 is placed to be deflected toward the lower side of the pre-heat feeder 220, it is possible to deflect energy application toward the corresponding portion. Further, after the melting of the introduced second iron source 2 is terminated, it is important to apply uniform energy throughout the lower cell 300 of the second melting furnace 20. Therefore, like the existing and common DC furnace, the first lower electrode 212a is disposed immediately below the upper DC electrode 211.

Accordingly, selectively using both lower electrodes (212a, 212b) or varying a relative ratio thereof may control a flow of electric energy application to the second melting furnace 20 during processing, which in turn can induce effective melting work. Although not shown, in associated with the above configuration, an installation for introduction of a chemical energy as a supplementary energy is also possibly provided to the furnace wall at the lower side of the pre-heat feeder 220.

Further, the pre-heat feeder 220 may include: a pre-heat chamber 221 that is formed in a cylindrical shape or a polygonal column shape to be extended in the vertical direction, thereby configuring a finger type shaft furnace; and a chamber door 222 that is installed on a lower side of the opened pre-heat chamber 221 in order to selectively open the lower side of the pre-heat chamber 221 and thus to selectively feed the second iron source 2.

More specifically, in order to perform high rate melting and reduce energy application, the pre-heat feeder 220 may be the equipment that preheats the second iron source 2 utilizing waste heat generated from the first melting furnace 10 and the second melting furnace 20 in the form of a finger type shaft furnace, which is relatively advantageous in terms of maintenance and operation, and may be applied to the top of the second melting furnace 20.

The electric furnace 1000 provided with a double type melting furnace F according to the present invention is suitably designed for production of high grade steel that must use OBM's in large quantities, therefore, an input ratio of the second iron source 2, that is, scraps may be considerably lower compared to a general electric furnace. Accordingly, the pre-heat feeder 220 is preferably designed with a volume that is sufficient to accept the entire second iron source 2 required for the melting work once.

Further, in order to effectively utilize waste heat generated in the first melting furnace 10 by the pre-heat feeder 220, as shown in FIG. 1, the first upper cell 100 and the second upper cell 200 may be connected in a duct form so as to communicate the first upper space (A1-1) of the first melting furnace 10 and the second upper space (A2-1) of the second melting furnace 20 together, so that an exhaust gas duct 500 may be mounted to feed the waste heat generated in the first melting furnace 100 toward the second melting furnace 20.

More specifically, the pre-heat feeder 220 adopted in the second melting furnace 20 of the present invention is a pre-heat furnace that utilizes the waste heat fed in the form of exhaust gas emitted to atmosphere without being used for production of molten metal among the energy applied to the inside of the furnace and can preheat the second iron source 2. However, when a partition wall unit 400 described later divides mechanically the first upper space (A1-1) of the first melting furnace 10 and the second upper space (A2-1) of the second melting furnace 20, it may occur a problem in that the waste heat generated in the first melting furnace 10 using a half or more of the main energy application cannot be supplied.

In order to overcome the above problem, the exhaust gas duct 500 may be mounted to connect the first upper space (A1-1) of the first melting furnace 10 and the second upper space (A2-1) of the second melting furnace 20, thereby ensuring a flow path of the waste heat generated in the first melting furnace 100. At the same time, it may be configured in that an entrance at the second melting furnace 20 side for the exhaust gas fed from the first melting furnace 10 is located in the opposite direction of the pre-heat feeder 220, and the corresponding fluid stream passes through an arc generating site of the second melting furnace 20 and then is supplied to the pre-heat feeder 220, whereby a sealing function of blocking the arc generated in the second electrode member 210 from the atmosphere may also be performed.

Accordingly, the exhaust gas duct 500 connecting the first upper space (A1-1) of the first melting furnace 10 and the second upper space (A2-1) of the second melting furnace 20 may perform two functions of recovering the waste heat generated in the first melting furnace 10 and, simultaneously, blocking a pickup phenomenon of nitrogen (N₂) among the atmosphere into the molten metal 3 by arc flow.

As shown in FIG. 1, the lower cell 300 may be combined with the first upper cell 100 and the second upper cell 200 in a horizontal direction (X-axial direction) and a vertical direction (Z-axial direction, respectively, whereby the first lower space (A1-2) of the first melting furnace 10 and the second lower space (A2-2) of the second melting furnace 20 may become a single integrated space.

Further, the lower cell 300 may be provided with a tapping port 310 on a floor surface forming the first lower space (A1-2) at a position corresponding to the first electrode member 110, which is installed on the small ceiling of the first roof part 100a formed on top of the first upper cell 100, so as to tap the molten metal 3 in the double type melting furnace F, wherein the floor surface forming the first lower space (A1-2), in which the tapping port 310 is formed, in the lower cell may bigher than a floor surface forming the second lower space (A2-2).

For example, with regard to the double type melting furnace F of the present invention, the upper cells (100, 200) of the first melting furnace 10 and the second melting furnace 20 may be configured as two separate ones, while the lower cell 300 may be a structure integrated in the form of a single furnace body. As such, the lower cell 300 has a structure, in which the molten metal 3 is mixed, without a submerged hill structure to divide the first melting furnace 10 and the second melting furnace 20 from each other, and may form a profile in which the bottom of the first melting furnace 10 has a height higher than the bottom of the second melting furnace 20 for the purpose of tapping the molten metal and for maintenance of the tapping port 310. Further, the lower cell may be configured to be installed on the lower side of the first melting furnace 10 without any protruding portion for mounting the tapping port 310.

Such a structure of the lower cell 300 may allow a substance and heat to freely move or flow, which in turn, enables combined application of separate resources (electric power, chemical energy) to the first melting furnace 10 and the second melting furnace 20. At the same time, it may implement a shortcut process design that simultaneously utilizes functions of different kinds of slag (4a, 4b) separated in the first melting furnace 10 and the second melting furnace 20, respectively, by the partition wall unit 400 described later.

Further, as described in the structure of the above lower cell 300, the tapping port 310 existing in the lower cell 300 was designed with a structure without undesirable Cold Zone by removing the protruding structure for tapping, which is typically present in the common electric furnace. Therefore, when determining a location of the tapping port 310, in order to supply sand fed for sealing after tapping, as shown in FIG. 3, the tapping port may be placed at a site immediately below an inlet of any one among the plurality of AC electrodes (111, 112, 113) provided in the first electrode member 110, so that it may be configured to fill the lower cell with sand by moving a sand feeding tube down through the inlet of the AC electrode.

Further, as shown in FIGS. 1 and 3, in order to control the flow of molten metal 3 between the first melting furnace 10 and the second melting furnace 20, a bottom gas blowing device provided with a plurality of plugs (600a, 600b, 600c, 600d, 600e, 600f, 600g) to discharge (or emit) gas may be disposed on the bottom of the lower cell 300.

For example, the first melting furnace 10 and the second melting furnace 20 are divided by the partition wall unit 400 in the integrated lower cell 300 and, in order to effectively implement a shortened process of concurrently performing desired melting and refining characteristics suitable for different purposes of the above furnaces, respectively, the flow of the molten metal (material and heat flows) should be appropriately regulated according to the purposes of detailed processes. Formation of deflected flow (a phenomenon that a main flow is concentrated in one direction; first melting furnace 10 -> second melting furnace 20 or second melting furnace 20 -> first melting furnace 10), formation of a flow that speedily and uniformly mixes the entire volume of molten metal 3, or the like may be exemplified.

To this end, on the bottom of the lower cell 300 to configure the first melting furnace 10 and the second melting furnace 20, a bottom gas blowing device 600 may be installed for implementing desired flow control. FIG. 3 illustrates an example of the bottom gas blowing device 600 which is provided with plugs (600a, 600b, 600c, 600d, 600e, 600f, 600g) arranged on the bottom of the lower cell 300. However, details of this device (types, size, number and position of the plugs) are not particularly limited to those in FIG. 3, and may vary according to the purpose thereof. At this time, kinds of the gas introduced through the bottom gas blowing device 600 may include inert gas (Ar, N₂) for simple flow control ot fuel/raw materials (O₂, Ch₄, CO, etc.) for reaction and heat source supply, which can be selectively introduced.

Further, as shown in FIG. 1, a tilting device 700 capable of tilting the double type melting furnace F, in which the first melting furnace 10 and the second melting furnace 20 are at least partially combined, in a horizontal direction (X-axial direction, or capable of double-tilting the same in both of the horizontal direction and a width direction (Y-axial direction) perpendicular to a vertical direction (Z-axial direction) may be provided at a lower side of the lower cell 300.

More specifically, the tilting device 700 may include: a support cylinder 710 that supports the double type melting furnace F while possibly tilting the same, in order to maintain the center of the double type melting furnace F tilted by the tilting device; and a plurality of, in particular, at least three drive cylinders 720 that are radially disposed around the support cylinder 710 to support the double type melting furnace on at least three points, and can be separately driven up and down in order to selectively tilt the double type melting furnace in the horizontal direction (X-axial direction) or the width direction (Y-axial direction), wherein these components are mounted on a portion at the lower side of the double type melting furnace F which corresponds to the center of the double type melting furnace F.

For example, the support cylinder 710 of the tilting device 700 is a structure installed at the center of weight of the double type melting furnace F, which may include: a tilting part that is tiltable in the horizontal direction (X-axial direction) and the width direction (Y-axial direction) and supports the double type melting furnace F; and a cylinder part connected to the above tilting part to insert the structure into a support surface of the double type melting furnace F so that the cylinder can move only up and down without alternative driving force, thereby playing a role of holding or securing the position of the double type melting furnace F. As such, the support cylinder 710 is a device required to satisfy a necessity of differing tapping and slag discharge directions from each other in order to implement structural features of the double type melting furnace F of the present invention.

Further, the plural drive cylinders 720 of the tilting device 700 are a control device for actually tilting the double type melting furnace F, each of which has a basic structure substantially similar to the support cylinder 710, but may be a hydraulic cylinder to apply the driving force and may be fixed on the support surface of the double type melting furnace F. Such a plurality of drive cylinders 720 may perform tilting of the double type melting furnace F through three-points supporting. However, for stable tilting of the double type melting furnace F, these may consist of total fourth (4) cylinders, including two at the first melting furnace side 10 and other two at the second melting furnace side 30, with respect to the support cylinder 710 holding the center of the double type melting furnace F, so as to preferably perform tilting in two directions of the double type melting furnace F (the horizontal direction (X-axial direction) and the width direction (Y-axial direction)).

As shown in FIG. 1, the partition wall unit 400 may be installed between the first upper cell 100 and the second upper cell 200 of the double type melting furnace F to ascend and descend in the vertical direction (Z-axial direction), wherein it can selectively divide (or separate) the first lower space (A1-2) of the first melting furnace 10 and the second lower space (A2-2) of the second melting furnace 20, which were originally integrated by the lower cell 300.

For example, scraps fed and molten as the second iron source 2 in the second melting furnace 20 must form oxidative atmospheric slag 4b when molten. According to the operation under oxidative atmosphere to remove P as one of impurities in the molten steel, oxygen ions in the slag 4b may be bound to P in the molten steel to thus generate P₂O₅. The generated P₂O₅ may become a component contained in the slag 4b to reduce P content in the molten steel. On the contrary, OBM's fed and molten as the first iron source 1 in the first melting furnace 10 must form reductive atmospheric slag 4a when molten. After removing oxygen in FeO residue in OBM's, the reduced Fe may be mixed into the molten steel, thereby playing a role of increasing actual yield of the introduced OBM's.

When using OBM's and the scraps at the same time, the actual yield of Fe may increase but P is picked up into the molten steel to increase P content if the formed slag is reductive. On the other hand, if the formed slag is oxidative, it is advantageous for P removal whereas the actual yield of Fe is reduced. In order to solve these problems, the first melting furnace 10 as an electric furnace for OBM's only and the second melting furnace 20 as a scrap exclusive electric furnace may be combined to form the double type melting furnace F, wherein OBM's-based slag 4a and the scrap-based slag 4b should be produced without being admixed together. Therefore, it may be necessary to adopt the partition wall unit 400 capable of differing the slag (4a, 4b) from each other in the double type melting furnace F.

As such, a basic object of the double type melting furnace F according to the present invention is: to perform melting and partial refining works of main materials having different features (OBM's vs. general scraps) as the first iron source 1 and the second iron source 2, respectively, wherein these works may be concurrently performed by separating the slag 4a of the first melting furnace 10 and the slag 4b of the second melting furnace 20; and to implement a process of producing high rate/high efficiency/high quality molten metal 3 by excluding a large amount of slag that lost its original function or is not proper for a final stage among different kinds of slag (4a, 4b) generated in the above furnaces (10, 20), before the first melting furnace 10 and the second melting furnace 20 are integrated for final refining and control of an end point. If a combination of the corresponding main materials is applied to any conventional and typical electric furnace, it is substantially impossible to implement the above object.

To this end, as a device for controlling separation/integration of the slag (4a, 4b) generated in detailed process steps, the partition wall unit 400 may be provided. Herein, the partition wall unit 400 may be composed of a water cooling structure and a refractory material, and may be adjusted by a drive device moving up and down between the first melting furnace 10 and the second melting furnace 20. The above device may be substantially an important device to implement the double type melting furnace F of the present invention.

Specifically, in order to selectively exclude the slag 4a generated in the first melting furnace 10, the first melting furnace 10 of the double type melting furnace F, of which separation/integration may be selectively adjusted by the partition wall unit 400, may include a first slag door 11, which is substantially formed in plural around the first melting furnace 10 at a boundary portion between the first upper cell 100 an the lower cell 300, and is configured in the form of a double door including an upper door 11a opening upward and a lower door 11b downward to face each other in the vertical direction (Z-axial direction). On the other hand, in order to selectively exclude the slag 4b generated in the second melting furnace 20, the second melting furnace 20 may include a second slag door 21, which is formed at a boundary portion between the second upper cell 200 and the lower cell 300, and is configured in the form of a single door opening upward or downward.

More specifically, the first slag door 11 formed of double doors (11a, 11b) in the first melting furnace 10 is a device for adjusting a level of the slag 4a generated in large quantities due to melting of OBM's introduced as the first iron source 1, and may have a structure possibly opened up /down by the double door (11a, 11b).

The slag 4a generated in the first melting furnace 10 principally has different (constitutional) composition from that of the slag 4b generated in the second melting furnace 20 as a result of the general scrap work. Further, such a difference may be partially controlled and maintained if desired. Since a gangue component input from OBMs comprises acidic major components (SiO₂, Al₂O₃), low alkaline slag is formed and a large amount of FeO is contained. The input FeO must be maximally reduced and recovered by introducing C-based supplementary raw material thereto. Further, due to CO gas generated during the above process, the slag 4a may be subjected to foaming. Because of mass generation of the slag 4a, if foaming occurs, work stability may be deteriorated, therefore, it is preferable to maintain a low basicity condition. However, on the other hand, there is a conflicting problem in that arc cannot be stabilized without such foaming.

For this reason, in order to inhibit foaming in the first melting furnace 10 while protecting arc, simultaneously, it is necessary to keep a predetermined amount of slag 4a confined in the furnace, which may also be advantageous in reductive reaction of FeO. Therefore, during the operation, the upper door 11a opening upward (water cooling type) is opened to maintain a predetermined level of the slag 4a. Thereafter, if exclusion of the slag 4a is required, the lower door 11b opening downward is opened to control the above operation. At this time, in order to smoothly control a large amount of slag 4a, as shown in FIG. 2, the first slag door 11 may be configured in the form of multi-door, in which the door is provided in plural around the first melting furnace 10.

Further, a second slag door 21 of the second melting furnace 20 is a device having the same function as that of the existing and common electric furnace, and may be utilized to discharge the slag 4b of the furnace. According to the present invention, the first slag door 11 mounted on the first melting furnace 10 is characterized in that the slag 4a generated in a large amount is continuously discharged to thus maintain a desirable level after taking a proper measure, while the second slag door 21 should be maintained in closed state except for a specific purpose, and has a structural form capable of driving in two directions (Y-axial direction, Z-axial direction) instead of an upward-opening structure in a simple water cooling panel form, which can be re-closed after opening during the operation.

Hereinafter, the following description will be given to describe major characteristics of an operation for molten metal production implemented by respective detailed equipment and devices to configure the double type melting furnace F of the electric furnace 1000 according to the present invention.

As shown in FIG. 4, at the beginning of the operation, the partition wall unit 400 maximally descends and thus the first melting furnace 10 and the second melting furnace 20 are separated from each other, wherein the first melting furnace 10 may melt OBM's continuously introduced as the first iron source 1 through a plurality of iron source feeders 120, and the second melting furnace 20 may preheat scraps as the second iron source 2 inside the pre-heat feeder 220 through arcing while the slag 4b is kept under foaming, and may further apply the melting energy to the first melting furnace 10.

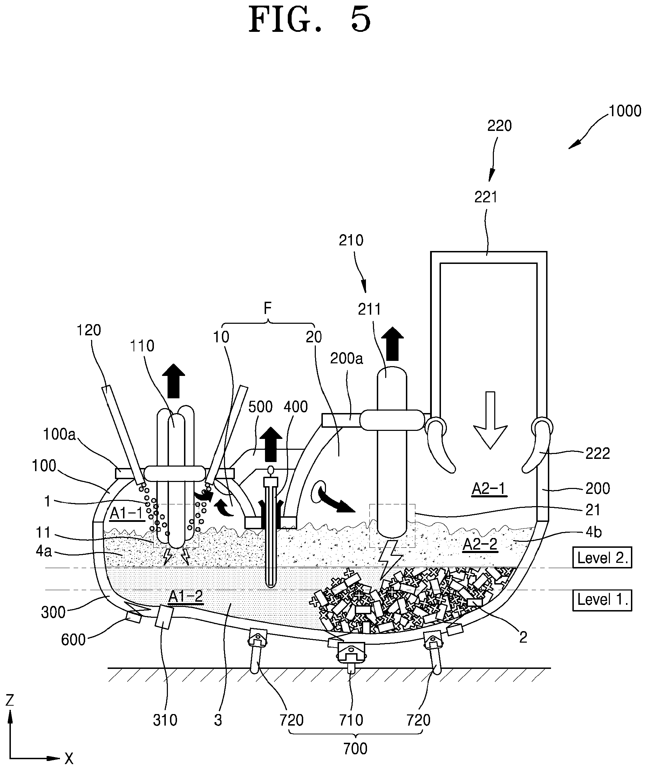

Following this, as shown in FIG. 5, a level of the molten metal 3 is raised (Level -> Level 2) by the melting process in the first melting furnace 10 and, if the raised level (Level 2) reaches a level completely submerged in the molten metal 3 when the second iron source 2 under preheating is introduced, a chamber door 222 is opened so as to charge the molten metal 3 with the preheated second iron source 2 in a pre-heat chamber 221.

As such, depending on the level of the molten metal 3, the preheated second iron source 2 is charged to thus attain effects of preventing nitrogen (N) pickup through arcing while ensuring a melting efficiency of the second iron source 2, that is, scraps, simultaneously.

At this time, as the partition wall unit 400 ascends in relation to the raised level of molten metal 3, a flow channel of the molten metal 3 between the lower spaces (A1-2, A2-2) of the first melting furnace 10 and the second melting furnace 20 may be extended (activation of material and heat exchange). Further, the first electrode member 110 of the first melting furnace 10 and the second electrode member 210 of the second melting furnace 20 may also appropriately ascend in relation to the raised level of molten metal 3.

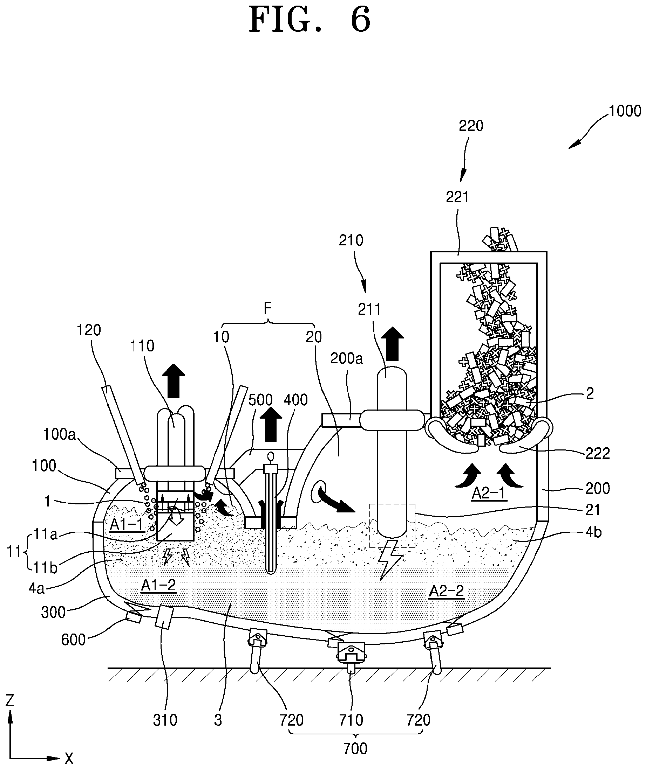

Subsequently, as shown in FIG. 6, the upper door 11a in the first slag door 11 for adjusting a level of slag 4a may be opened upward in the first melting furnace 10. On the other hand, in order to melt the second iron source 2, which was charged into the molten metal 3, and to conduct next work, a newly and temporarily stored second iron source 2 in the pre-heat feeder 220 may be preheated in the second melting furnace 20. In this case, the partition wall unit 400 may further ascend in relation to the raised level of molten metal 3, so that the flow channel of molten metal 3 between the lower spaces (A1-2, A2-2) of the first melting furnace 10 and the second melting furnace 20 may further be extended (activation of material and heat exchange). In addition, the first electrode member 110 of the first melting furnace 10 and the second electrode member 210 of the second melting furnace 20 may also continuously ascend in relation to the raised level of molten metal 3.

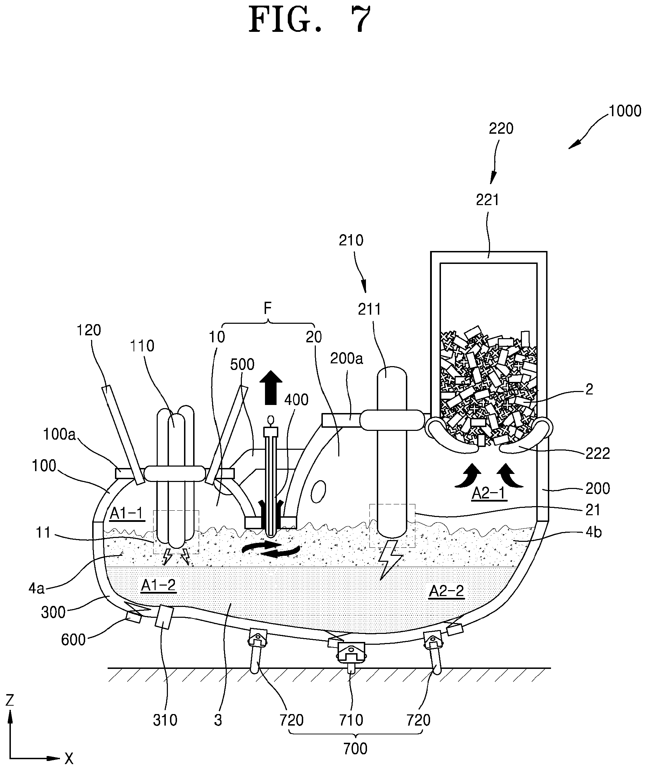

Following this, as shown in FIG. 7, the partition wall unit 400 is completely raised and fully opened and, after excluding the slag 4a of the first melting furnace 10 (as a cause of decrease in refining performance) by upwardly opening the upper door 11a in the first slag door 11, final refining may be performed by admixing the molten metal with the slag 4b of the second melting furnace 20. As such, by fully opening the partition wall unit 400 and completely extending a refining reaction interface area, refining efficiency may be maximized.

Throughout all processes as shown in FIGS. 4 to 7, owing to material and heat exchange in the lower cell 300 in which the first melting furnace 10 and the second melting furnace 20 are integrated, the refining reaction may continuously proceed in the second melting furnace 20, eventually, as shown in FIG. 7, maximum refining performance may be ensured after fully opening the partition wall unit 400. At this time, the first melting furnace 10 may perform the reductive reaction of FeO in large quantities input from OBMs by maintaining the reductive slag 4a until the partition wall unit 400 is completely opened.

Further, as shown in FIG. 8, when tapping the molten metal 3 in the double type melting furnace F, upwardly moving the drive cylinder 720 of the tilting device 700 at the second melting furnace side 20 may result in tilting in a horizontal direction (X-axial direction) of the double type melting furnace F, so that the double type melting furnace F may be tilted in the direction of the first melting furnace 10 in which the tapping port 310 is formed.

Further, as shown in FIG. 9, in a state in which the partition wall unit 400 divides (or separates) the first melting furnace 10 and the second melting furnace 20 during operation, if the slag 4a inside the first melting furnace 10 or the slag 4b inside the second melting furnace 20 is required to be forcedly excluded, the double type melting furnace F may be tilted in the width direction (Y-axial direction) by upwardly moving the drive cylinder 720 in the width direction (Y-axial direction) of the first melting furnace 700 so that the double type melting furnace F can be tilted in the direction of the first slag door 11 in the first melting furnace 10 and the second slag door 21 in the second melting furnace 20.

For smooth tilting of the double type melting furnace F as shown in FIG. 8 or 9, the pre-heat feeder 200 may be configured in a separable form to the double type melting furnace F. According to the specific tilting device 700 proposed in the present invention, a driving procedure of moving down and tilting a main body of the double type melting furnace F in a desired direction may be implemented.

Therefore, with regard to the electric furnace 1000 according to an embodiment of the present invention, this is based on concurrent introduction of ore-based materials (OBM's) and low-grained scraps as well as general scraps, wherein gangue components input in large quantities from OBM's may be effectively separated to prevent the same from being mixed with the existing slag (the gangue comprising SiO₂ and Al₂O₃ as main components mostly acts as an acidic slag and, if the input amount is large, may become a reason for introducing a large amount of CaO to refine/remove P component in the molten steel, therefore, an increase in unit of slag former source and a large amount of slag generated due to the same may act major factors for non-economical structure such as reduction of molten steel recovery, increased energy consumption, extended working time, etc.), whereby a double type melting furnace capable of melting the main raw material and refining simultaneously may be implemented.

As such, in order to change the conventional "blast furnace-converter" production system into the "electric furnace" production system, the present invention relates to a new concept of melting method using an electric furnace that introduces a large amount of ore-based iron source (representative by DRI) and, simultaneously, can ensure the same or higher productivity/economical advantage/quality than the conventional "blast furnace-converter" production system, wherein a new form of electric furnace capable of using OBM's in large quantities is used to thus achieve effects of realizing carbon neutral in steel-making industry.

For example, when the electric furnace with a configuration of double type melting furnace according to the present invention is applied, influence of gangue input in large quantities from DRI on working as well as optimum refining conditions may be maintained/managed by effectively separating and discharging the gangue from the first melting furnace; mass application of DRI utilizing the first melting furnace for OBM's only with high efficiency is possible to thus decrease Tramp components; according to a process of scrap introduction/operation through the first melting furnace, to which OBM's are continuously charged, and the second melting furnace connected to the same in the form of double structure, a perfect Flat Bath operation may be performed; and nitrogen pick-up may be effectively blocked through arc sealing owing to an exhaust gas duct structure, thereby ensuring N output level of the converter. Further, a high energy concentrated structure of the first melting furnace, scrap preheating in the second melting furnace using exhaust gas, and the concurrent operation of the first melting furnace and the second melting furnace can reduce an energy consumption to a general scrap working level or less, and shorten an operation time to the converter level.

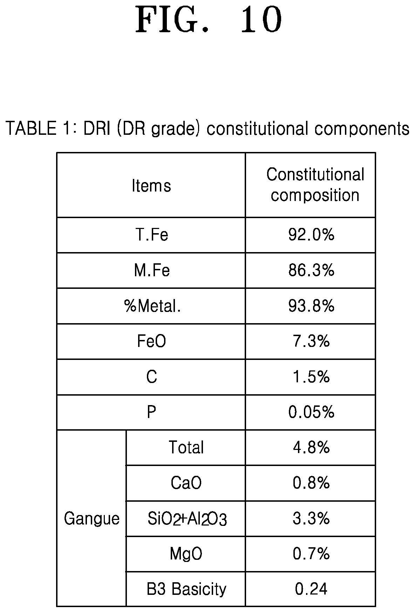

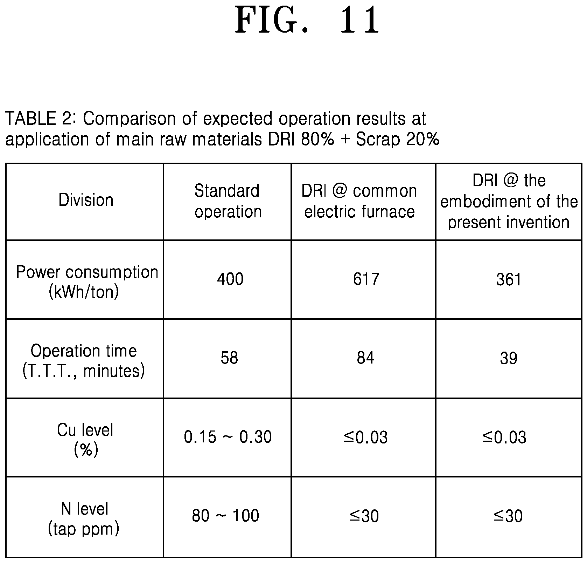

For example, as shown in FIGS. 10 and 11, with regard to effects of the embodiments of present invention, when DR grade DRI in Table 1 is applied in large quantities based on practical operation results of the common electric furnace, expected operation indexes of the common electric furnace and the present invention are compared to each other and shown in Table 2. At this time, the expected operation result was reflected by a simple energy and material calculation with major indexes varying in the operation with respect to DRI components listed in FIG. 10.

As illustrated in Table 2 shown in FIG. 11, an amount of power consumption was 617 kWh/ton for the common electric furnace. However, according to the expected operation index of the present invention, it is expected to use 361 kWh/ton of power, demonstrating that the power consumption was decreased by about half compared to the common electric furnace. Further, the operation time was about 84 minutes for the common electric furnace while taking about 39 minutes according to the expected operation result of the present invention, therefore, demonstrating that the operation time was also decreased by about half compared to the common electric furnace. At this time, Cu level and N level are 0.03% and 30 ppm, respectively, which are substantially similar to those of the converter and are possibly adjusted. Accordingly, the expected operation indexes of the present invention are predicted to be substantially the same or more excellent as compared to all scrap electric furnaces.

In this regard, the operation result of the common electric furnace in FIG. 11 is the average at scrap 100% practical operation implemented in the standard operational common electric furnace, while the expected operation index according to the embodiments of the present invention corresponds to DRI 80% + scrap 30% application.

Although the present invention has been described with reference to the embodiments illustrated in the drawings, this is only for illustrative purpose and those skilled in the art will understand that a variety of modifications and other equivalent embodiments are possible from the above embodiments. Accordingly, the genuine and technical scope of the present invention to be protected will be defined by the technical spirit of the present invention in the appended claims described below.

## Claims

1. An electric furnace provided with a double type melting furnace in which two melting furnaces are included and at least partially combined together, in order to melt different iron sources, the electric furnace comprising:
a first upper cell that forms a first upper space of a first melting furnace in which a first iron source is introduced and molten;
a second upper cell that is disposed in a horizontal direction of the first upper cell and forms a second upper space of a second melting furnace in which a second iron source is introduced and molten;
a lower cell that is combined to lower portions of the first upper cell and the second upper cell and forms a single integrated space in which a first lower space of the first melting furnace and a second lower space of the second melting furnace are integrated; and
a partition wall unit that is installed to vertically move up and down between the first upper cell and the second upper cell, and separates the first lower space of the first melting furnace and the second lower space of the second melting furnace, although both of the lower spaces are integrally formed by the lower cell.

2. The electric furnace according to claim 1, wherein the first upper cell has a furnace wall formed of a refractory material so that the melting furnace has a fire-resisting structure.

3. The electric furnace according to claim 1, wherein the first upper cell includes:
a first electrode member, of which at least a portion is inserted into the first upper space of the first melting furnace through a small ceiling of a first roof part formed on top of the first upper cell and melts the first iron source with arc heat; and
a plurality of iron source feeders that are radially disposed around the center of the first electrode member and feeds the first iron source through the first upper space of the first melting furnace.

4. The electric furnace according to claim 3, wherein the first electrode member includes a plurality of alternate current (AC) electrodes that are radially disposed around the center of the small ceiling of the first roof part, and
the plurality of iron source feeders continuously feed the first iron source, respectively, toward ignition points of individual AC electrodes corresponding to individual iron source feeders.

5. The electric furnace according to claim 1, wherein the second upper cell includes:
a second electrode member, of which at least a portion is inserted into the second upper space of the second melting furnace through a small ceiling of a second roof part formed on top of the second upper cell and melts the second iron source with arc heat; and
a pre-heat feeder that is installed on one side of the second electrode member on top of the second upper cell, temporarily stores a predetermined amount of the second iron source in a storage space inside the pre-heat feeder, preheats the second iron source temporarily stored in the above storage space using waste heat generated inside the second melting furnace, and then, feeds the second iron source through the second upper space of the second melting furnace.

6. The electric furnace according to claim 5, wherein the second electrode member includes:
an upper direct current (DC) electrode that is inserted through the small ceiling of the second roof part, and is provided on the second upper space side of the second melting furnace; and
a lower DC electrode that is installed on the bottom of the lower cell to face with the upper DC electrode in the vertical direction, and is provided on the second lower space side of the second melting furnace, and
wherein the lower DC electrode includes:
a first lower electrode, in which a central axis is formed to be coaxial with a central axis of the upper DC electrode on the bottom of the lower cell, so that the lower DC electrode can directly face with the upper DC electrode; and
a second lower electrode, in which a central axis is formed to be inclined at a predetermined angle to the central axis of the upper DC electrode on the bottom of the lower cell and thus to be biased toward the pre-heat feeder with respect to the upper DC electrode, so that the lower DC electrode can face with the upper DC electrode in an inclined direction.

7. The electric furnace according to claim 6, wherein the second electrode member induces a current flow between the upper DC electrode and the second lower electrode immediately after feeding the second iron source by the pre-heat feeder, while inducing a current flow between the upper DC electrode and the first lower electrode after the second iron source is completely molten.

8. The electric furnace according to claim 1, wherein a volume of the first melting furnace consisting of the first upper space of the first upper cell and the first lower space of the lower cell is smaller than a volume of the second melting furnace consisting of the second upper space of the second upper cell and the second lower space of the lower cell.

9. The electric furnace according to claim 1, wherein, in order to communicate the first upper space of the first melting furnace with the second upper space of the second melting furnace, the electric furnace further includes an exhaust gas duct that connects the first upper cell and the second upper cell in a duct form and feeds waste heat generated in the first melting furnace toward the second melting furnace.

10. The electric furnace according to claim 1, wherein the first melting furnace includes: a first slag door, which is provided at a boundary portion between the first upper cell and the lower cell and is configured in a double door form that includes an upper door opening upward and a lower door opening downward to face each other in the vertical direction, so that the slag generated in the first melting furnace can be selectively excluded.

11. The electric furnace according to claim 10, wherein the first melting furnace opens the upper door to maintain a height of the slag in the first melting furnace at a predetermined level during operation, while opening the lower door when excluding the slag inside the first melting furnace.

12. The electric furnace according to claim 1, wherein the second melting furnace includes: a second slag door, which is provided at a boundary portion between the second upper cell and the lower cell and is configured in a single door form to be opened upward or downward, so that the slag generated in the second melting furnace can be selectively excluded.

13. The electric furnace according to claim 1, wherein, in order to control a flow of molten metal between the first melting furnace and the second melting furnace, the electric furnace further includes a bottom gas blowing device that is disposed on the bottom of the lower cell and is provided with a plurality of plugs to discharge gas.

14. The electric furnace according to claim 1, wherein the lower cell is provided with a tapping port on a floor surface forming the first lower space at a position corresponding to the first electrode member, which is installed on the small ceiling of the first roof part formed on top of the first upper cell, so as to tap the molten metal in the double type melting furnace.

15. The electric furnace according to claim 14, wherein the floor surface forming the first lower space, in which the tapping port is formed, in the lower cell is higher than a floor surface forming the second lower space.

16. The electric furnace according to claim 14, wherein the electric furnace further includes: a tilting device that can tilt the double type melting furnace, in which the first melting furnace and the second melting furnace are at least partially combined, in the horizontal direction or enables double tilting of the same in the horizontal direction and a width direction perpendicular to the vertical direction.

17. The electric furnace according to claim 16, wherein the tilting device includes:
in order to maintain the center of the double type melting furnace tilted by the tilting device, a support cylinder that supports the double type melting furnace while possibly tilting the same; and
a plurality of drive cylinders, specifically, at least three drive cylinders that are radially disposed around the support cylinder to support the double type melting furnace on at least three points, and can be separately driven up and down in order to selectively tilt the double type melting furnace in the horizontal direction or the width direction.

18. The electric furnace according to claim 16, wherein the tilting device tilts the double type melting furnace in the horizontal direction so that the double type melting furnace can be tilted in a direction of the first melting furnace, in which the tapping port is formed, when tapping the molten metal in the double type melting furnace;
on the other hand, when excluding the slag inside the first melting furnace or the slag inside the second melting furnace, the tilting device tilts the double type melting furnace in the width direction so that the double type melting furnace can be tilted in a direction of the first slag door in the first melting furnace and a direction of the second slag door in the second melting furnace.

19. The electric furnace according to claim 5, wherein the pre-heat feeder includes:
a pre-heat chamber that is formed in a cylindrical shape or a polygonal column shape to be extended in the vertical direction, thereby configuring a finger type shaft furnace; and
a chamber door that is installed on a lower side of the opened pre-heat chamber in order to selectively open the lower side of the pre-heat chamber.

20. The electric furnace according to claim 1, wherein the first iron source introduced into the first melting furnace includes ore-based materials (OBM's),
while the second iron source introduced into the second melting furnace includes scraps.
